# EUROPEAN PATENT APPLICATION

(11) **EP 4 556 857 A1**
(43) Date of publication of application: **21.05.2025**
(21) Application number: 23210355.6
(22) Date of filing: 16.11.2023
(51) Int. Cl.: G01D 4/00, G01D 4/08, G01D 4/12, G01D 4/14, G06Q 50/06

(54) **A METHOD FOR COLLECTING CONSUMPTION PROFILE DATA FROM A UTILITY METER**

(71) Applicant: Kamstrup A/S, 8660 Skanderborg (DK)
(72) Inventor: Hald, Flemming, 8660 Skanderborg (DK)
(74) Representative: Plougmann Vingtoft a/s

(57) **Abstract**

A method and a system for collection consumption profile data from a utility meter in a manner that the transmission of data messages is independent of the consumption profile. The method comprises generating a timestamp each time a measured amount of consumed utility has increased or changed with a predetermined amount of the consumed utility, whereby a consumption profile is described by the generated timestamps. Data messages with one, or more, time stamps are transmitted from the utility meter to a receiver. The message length and the point in time of the data transmissions are arranged so they are independent of the consumption profile and therefore outsiders monitoring the transmission cannot from the transmissions detect a consumption profile.

## Description

### FIELD OF THE INVENTION

The present invention relates to a method for collection consumption profile data from a utility meter in a manner that the transmission of data messages is independent of the consumption profile.

### BACKGROUND OF THE INVENTION

A utility meter is a device used to measure the consumption of various utilities, such as electricity, natural gas, water, or heat. A utility meter for instance may be a flowmeter used to measure the rate of flow of liquids or gases through a pipeline or conduit, or a heat meter used to measure the energy content of liquids or gases flowing through a pipeline or a conduit. Utility meters are widely used by utility companies for monitoring and controlling the flow of fluids and consumption of a utility by a consumer.

Measurements from a utility meter can be transmitted to a central data collecting site through various communication methods and technologies, depending on the application and the specific requirements of the system. For instance, data may be transmitted digitally over wired connections or over wireless connections.

A data message may typically be transmitted every time a certain amount of a consumed volume has been measured by the utility meter. The disadvantage of this method is that it may reveal a use pattern to outsiders, who may monitor the transmissions. Even though the messages may be encrypted, just by monitoring the number of messages transmitted a use pattern may be revealed. For instance, outsiders who want to break into a house may monitor the transmissions to determine when there are people in the house, and when there are no people in the house, they may break into a house without anyone being home, as there would be longer time between transmissions when the use of the measured utility is low.

Hence, an improved method for transmitting consumption profile data from a utility meter, would be advantageous, and in particular a more efficient and/or reliable method for transmitting consumption profile data from a utility meter, without revealing consumption patterns to outsiders would be advantageous.

### OBJECT OF THE INVENTION

It is the object of the present invention to provide a method for collecting consumption profile data from a utility meter and transmitting the consumption profile data.

It is a further object of the present invention to provide an alternative to the prior art.

In particular, it may be seen as an object of the present invention to provide a method for collecting consumption profile data from a utility meter and transmitting the consumption profile data that solves the above mentioned problems of the prior art with avoiding that a use profile may be determined from the message length and/or the point in time of the transmissions.

### SUMMARY OF THE INVENTION

Thus, the above-described object and several other objects are intended to be obtained in a first aspect of the invention by providing a method for collecting consumption profile data from a utility meter,
the method comprising:
- the utility meter measuring an amount of a consumed utility,
- providing a conversion model, wherein a timestamp corresponds to a predetermined amount of the consumed utility,
- based on the conversion model and the measured amount of consumed utility, generating in the utility meter a timestamp for each time the measured amount of consumed utility has increased or changed with the predetermined amount of the consumed utility, whereby a consumption profile is described by the generated timestamps,
- storing the generated timestamps, at least temporarily, in the utility meter,
- generating data messages comprising one or more of the stored generated timestamps, wherein each data message has a message length, which is independent of the consumption profile, preferably the data messages have a fixed length, and
- transmitting the data messages from the utility meter to a receiver at transmission points in time, which are independent of the consumption profile.

The present invention ensures that data describing a consumption profile can be collected from a utility meter, without outsiders or hackers, who is monitoring the data transmissions, from the data transmissions are able to detect a pattern in the consumption. The data messages are encrypted, so the content of the data messages cannot be determined by outsiders.

The consumption profile is a profile of when the measured utility is used. For instance, the consumption profile may show a time distribution of use of the measured utility during a day, a week, a month, or a year. Each timestamp shows the point in time where a predetermined amount of the consumed utility has been used since the last registered timestamp. Therefore, a graph showing the timewise distribution of the timestamps will be a consumption profile. The smaller the predetermined amount of the consumed utility is, the higher will the resolution of the consumption profile be.

The predetermined amount of the consumed utility may be selected by a user or technician. Alternatively, the predetermined amount is automatically selected by a software implemented function based on size of meter, historical consumption etc.

In a prior art method, monitoring the length of the data messages and the points in time the data messages are transmitted may make it possible for outsiders or hackers to detect the consumption profile by analysing the length and transmission point in times of data messages and thereby be able to predict when there are no people in a building.

The invention is particularly, but not exclusively, advantageous for preventing detecting a consumption profile by monitoring the transmissions of the data messages. The data messages have a message length, which is independent of the number of timestamps in the data message, and the data messages are transmitted from the utility meter to a receiver at transmission points in time, which are independent of the consumption profile such as at preselected points in time or, at least partly, randomized/pseudo-randomized points in time. Therefore, outsiders cannot obtain any information about the consumption profile by monitoring the message length or time of transmission.

Each data message may comprise several timestamps. Each timestamp represents that the predetermined amount of a consumed utility has been measured. In other words, each timestamp represents the predetermined amount of the consumed utility. For instance, the predetermined amount may be 1 Liter, 10 Liter, 100 Liter, 1 m³ or another suitable unit, and then a timestamp is generated every time the predetermined amount has been measured passing through the utility meter. The timestamp comprises the point in time the predetermined amount has been measured. Or in other words the point in time when the predetermined amount has been consumed. The timestamps are initially stored in the utility meter, typically the timestamps are stored in RAM or ROM, and the timestamps are eventually transmitted to the receiver. The receiver may store the consumption profile data in a central database, or it may transmit the consumption profile data to another unit, for instance a central computer or server, which stores the consumption profile data in the central database. The consumption profile data comprises the point in time from the timestamps and may further optionally comprise the consumed volume that the timestamp represents. The point in time from the timestamps indicates either an absolute time when the consumed utility has increased or changed with the predetermined amount since the last detection, or the time difference between the previous detection and a current detection of an increase or change of the consumed utility with the predetermined amount.

The conversion model may comprise a value of the predetermined amount of utility and/or a list comprising one or more conversion factors, wherein the conversion factor for a data message may be selected so all measured volume since the last transmission can be included in the data message, so that in case of a high consumption, a high corresponding conversion factor can be chosen. Alternatively, the conversion model may comprise a formula to calculate a conversion factor suitable for the measured volume. The conversion factor may be an integer to be multiplied with the value of the predetermined amount of the consumed utility. Hereby, if the integer is two, every second timestamp may be included in the data message, and the timestamp in the data message represent a utility amount, which is two times the predetermined amount. If the integer is three, every third timestamp may be included in the data message, and the timestamp in the data message represent a utility amount, which is three times the predetermined amount. If the integer is four, every fourth timestamp may be included in the data message, and the timestamp in the data message represent a utility amount, which is four times the predetermined amount etc.

The data message preferably has a fixed or constant length, or a length that is independent of the number of timestamps in the data message, so there is room in the data message for a maximum number of timestamps. Alternatively, the data messages may comprise a fixed or constant number of timestamps. Generation of data messages may include: selection of a conversion factor from the conversion model and/or including one or more padding elements in the data message and/or including one or more redundant timestamps in the data message, such that the data messages have a message length, which is independent of the consumption profile or such that the data messages have a fixed or constant length.

A padding element is understood to be a dummy element such as a bit, a byte, or a dummy filler-timestamp which may be recognized and discarded by the receiver. A redundant timestamp is understood to be a timestamp which is transmitted more than one time.

Optionally, the method according to the first aspect of the invention comprises a step of encrypting the data message and/or calculating a Message Authentication Code (MAC) and including the MAC in the data message. The encryption and MAC may be based on symmetric encryption methods and keys such as AES-128, AES-256, DES or triple DES or on asymmetric encryption methods such as Diffie-Hellman, Elliptic Curve, RSA or TLS.

The data messages are transmitted at transmission points in time, which are independent of the consumption profile. This may be achieved by the data message being transmitted at preselected times or at randomized or pseudo randomized times. Preferable, the data messages are transmitted within a randomized or pseudo randomized time period from a predetermined time. The predetermined time may be once every hour, but the exact time may be randomized, or pseudo randomized, to be somewhere within +/- a number of minutes, for instance 2, 5, 10 minutes, or within +/- a percentage of the transmission interval, for instance 2%, 5%, 10%, from the predetermined time.

The data obtained through the data messages may be used to analyse the consumption measured by the utility meter and obtain a high-resolution consumption profile for a user or household comprising one, or more, utility meters.

The data messages are used to analyse and monitor the utility meters operation for instance by comparing consumption profiles with historical data to detect changes in consumption. Optionally the data message further comprises an absolute value or a total accumulated value of the amount of consumed utility.

The utility meter of the method according to the invention may be a battery-operated consumption meter such as a water meter, a gas meter, or a thermal energy meter. The utility meter of the method according to the invention may comprise a flow meter and/or a transmitter unit. The transmitter unit and/or the flow meter may be integrated in the utility meter as one device or may be connected via a wire or via wireless communication. The utility meter / transmitter unit may comprise one or more communication interfaces for wired or wireless communication such as radio communication or serial communication. The transmitter unit may communicate via one or more communication protocols such as wired or wireless MBus, Zigbee, LoRa, Bluetooth (BLE), LTE cat. M, NB-IoT, proprietary communication protocols or any other suitable communication protocol. The method according to the invention may optionally include transmitting the data message from the utility meter to a receiver via a wireless communication interface such as a radio communication interface. The invention is further especially advantageous for battery operated utility meters using a radio communication interface since a predictable energy consumption is achieved in combination with securing the privacy of the consumer.

According to an embodiment, the method further comprises storing the consumption profile data in a central database, wherein the consumption profile data comprises the time registered by each timestamp and the amount of the consumed utility represented by the timestamp based on the conversion model.

The conversion model may be used to convert the information contained in a data message to an amount of the consumed utility represented by the timestamp. The data message may comprise an optional identification of the conversion model used for the specific data message, which may include the conversion factor and/or the measurement unit for the specific data message. Alternatively, the conversion model is fixed so that the same conversion factor and/or measurement unit is used for all data messages transmitted by the specific utility meter.

The data message is transmitted to the receiver. The receiver may be a computer, a concentrator, a gateway, a head end system, or any kind of device able to receive a data message. The receiver may further transmit the data message to a central computer, which may store the consumption profile data in the central database, or the receiver may by itself store the consumption profile data in the central database.

According to an embodiment, the method further comprises monitoring the utility meters operation based on the consumption profile data stored in the central database.

The consumption profile data stored in the central database may be used to monitor the utility meters operation. The consumption profile data may be used to create profiles of the consumption. The consumption profiles may cover the use of the utility over a time period, hours, days, months, or years, and the consumption profiles may be compared with historical data, or earlier stored consumption profile data to detect changes in the consumption profiles.

According to an embodiment, the message length of the data messages is independent of the number of timestamps in the data message.

The data message may comprise one or more timestamps. But the message length is independent of the number of timestamps in the message. The data message may have a fixed length, or the part of the data message containing the timestamps may have a fixed length, if the length of timestamps to be transmitted is less than the fixed length, dummy filler-bits or bytes may be transmitted to keep the length fixed. The data message may have a maximum number of timestamps, and if the number of timestamps is lower than the maximum number of timestamps, dummy filler-timestamps may be transmitted to keep the number of timestamps fixed to the maximum number of timestamps.

According to an embodiment, the data messages are transmitted at predetermined times.

To prevent that any information about use patterns may be derived from the transmissions of data messages, the data messaged may be transmitted at predetermined times. The predetermined time may for instance be each hour, each second hour, or each third hour, each day, or any other suitable interval.

According to an embodiment, the data messages are transmitted within a randomized or pseudo-randomized time period from a predetermined time.

To avoid collision of data messages, the data messages may be transmitted a randomized or pseudo-randomized time period from the predetermined time. The randomising or pseudo-randomizing may be achieved using a specific algorithm. The algorithm may be utilizing information from the previous transmitted data message to determine the randomized or pseudo-randomized time period the next message is transmitted from the predetermined time. Furthermore, the determination regarding when the next data messages will be transmitted may be made at the time of the previous message's transmission. This approach ensures a dynamic and adaptive transmission schedule, enhancing the overall efficiency of the data communication.

According to an embodiment, each data message comprises a plurality of timestamps up to a maximum number of timestamps.

According to an embodiment, each timestamp indicates a point in time in absolute time.

The point in time in the timestamp may be indicated by absolute time, which is indicating the day and time that the amount of the consumed utility to be measured has increased or changed with the predetermined amount.

According to an embodiment, each timestamp indicates a time difference between the point in time the current detection of that the consumed utility has increased or changed with the predetermined amount was registered and the point in time the previous detection of that the consumed utility has increased or changed with the predetermined amount was registered.

According to an embodiment, each timestamp indicates a time difference between two adjacent points in time when the consumed utility has increased or changed with the predetermined amount.

Instead of indicating the absolute time, the timestamp may comprise an indication of how much time have elapsed since the previous detection and the current detection, of that the consumed utility has increased or changed with the predetermined amount, wherein the current detection is the detection that caused the generation of the timestamp Thereby, the timestamp indicates the time period between two adjacent detections of that the consumed utility has increased or changed with the predetermined amount.

According to an embodiment, the plurality of timestamps in the data messages includes previously transmitted timestamps.

If there are not enough timestamps generated since the last data message was transmitted to fill up a data message to the maximum number of timestamps, then some previously transmitted timestamps may be transmitted again.

According to an embodiment, if the number of timestamps to be transmitted is larger than the maximum number of timestamps for the data message, then the amount of a consumed utility that each timestamp represent is increased and the number of timestamps is correspondingly reduced.

If there were generated more timestamps since the last data message was transmitted than the maximum number of timestamps, then the amount of consumed utility that each timestamp represent is increased by increasing a conversion factor based on the conversion model. The utility meter still stores a timestamp for each time the predetermined amount is detected, but if for instance only every second timestamp is transmitted then the transmitted timestamp represents two times the predetermined amount, or you can say the transmitted timestamp represent the consumed amount for two timestamps.

According to an embodiment, if the number of timestamps to be transmitted is larger than the maximum number of timestamps for the data message, then only the maximum number of timestamps are transmitted, and the remaining timestamps are saved for transmission in a subsequent data message.

If there were generated more timestamps since the last data message was transmitted than the maximum number of timestamps, then only the oldest not transmitted timestamps are transmitted.

According to an embodiment, the data message comprises a conversion factor to be multiplied with the predetermined amount to obtain the amount of the consumed utility represented by each timestamp in the data message.

The conversion factor is a factor to be multiplied with the predetermined amount of the consumed utility to indicate the amount of the consumed utility that each timestamp in the data message represents.

According to an embodiment, each timestamp is transmitted at least twice.

To ensure no timestamp is lost in transmission, each time stamp may be transmitted at least twice. A redundancy factor may be selected in the system and if the redundancy factor is set to two, then each time stamp is transmitted at least two times.

In a second aspect, the invention relates to a system for collecting consumption profile data from a utility meter,
wherein the system comprises:
   - the utility meter arranged to measure an amount of a consumed utility, and
   - a conversion model, wherein a timestamp corresponds to a predetermined amount of the consumed utility,
wherein
   - based on the conversion model and the measured amount of consumed utility, the utility meter is arranged to generate a timestamp for each time the measured amount of consumed utility has increased or changed with the predetermined amount of the consumed utility, whereby a consumption profile is described by the generated timestamps,
   - the utility meter is arranged to store, at least temporarily, the generated timestamps in the utility meter,
   - the utility meter is arranged to generate data messages comprising one or more of the stored generated timestamps, wherein each data message has a message length, which is independent of the consumption profile, preferably the data messages have a fixed length, and
   - the utility meter is arranged to transmit the data messages from the utility meter to a receiver at transmission points in time, which are independent of the consumption profile.

The individual aspects of the present invention may each be combined with any of the other aspects. These and other aspects of the invention will be apparent from the following description with reference to the described embodiments.

### BRIEF DESCRIPTION OF THE FIGURES

The method and system according to the invention will now be described in more detail with regard to the accompanying figures. The figures show one way of implementing the present invention and is not to be construed as being limiting to other possible embodiments falling within the scope of the attached claim set.
Fig. 1 illustrates the system of the present invention.
Fig. 2 illustrates the data message.
Fig. 3 illustrates a consumption profile showing consumption over time.
Fig. 4 illustrates transmitting a series of timestamps when a certain number of timestamps have been generated.
Fig. 5 illustrates transmitting a series of timestamps at fixed intervals.
Fig. 6 illustrates an embodiment transmitting a series of timestamps at fixed intervals and fixed data message size.
Fig. 7 illustrates an embodiment where more than the maximum number of timestamps per data message is generated within the fixed interval, and transmission of some of the timestamps are delayed and transmitted in a subsequent data message.
Fig. 8 illustrates an embodiment where more than the maximum number of timestamps per data message is generated within the fixed interval, and therefore a reduced number of timestamps are transmitted.
Fig. 9 illustrates an embodiment where each timestamp is transmitted twice, and dummy filler-timestamps are transmitted if there are not enough timestamps to fill up a data message.
Fig. 10 illustrates an embodiment where each timestamp is transmitted at least twice and timestamps which already have been transmitted twice are used to fill up the data message if there are not enough timestamps to fill up a data message.
Fig. 11 is a flow chart illustrating the method of the invention.

### DETAILED DESCRIPTION OF AN EMBODIMENT

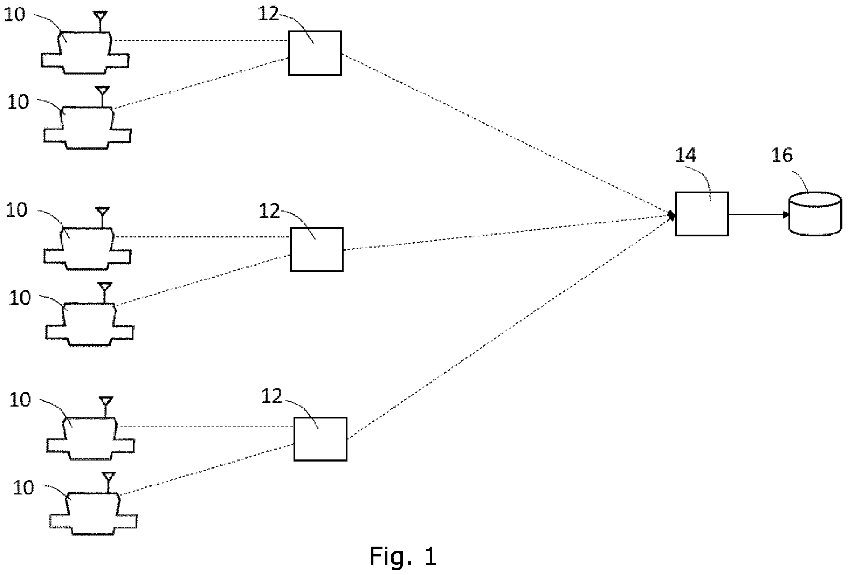

Fig. 1 shows the system of the present invention comprising utility meters 10, there may be several utility meters of different kind, flow meters, heats meters, or other kind of utility meters 10. The utility meters are transmitting data messages to the receiver 12. The receiver then may further transmit the data messages or the consumption profile data comprised in the data messages to a central computer 14. The central computer then stores the consumption profile data in a central database 16, for later or immediate analysis. Fig. 1 shows three sets of utility meters 10 transmitting data messages to a receiver 12, each set may for instance be placed in a separate building or at separate locations. Alternatively, the receiver may by itself store the consumption profile data from the data messages in the central computer.

The communication between the utility meters and the receivers may be wireless or may be a wired communication path, such as wired or wireless MBus, Zigbee, LoRa, Bluetooth (BLE), LTE cat. M, NB-IOT, proprietary communication protocols or any other suitable communication protocol. Also, the communication between the receivers and the central computers may by wired or wireless. The receivers 12 may temporarily store the received data locally and transmit the data to the central computer at predetermined times, or the receivers may immediately transmit the received data to the central computer.

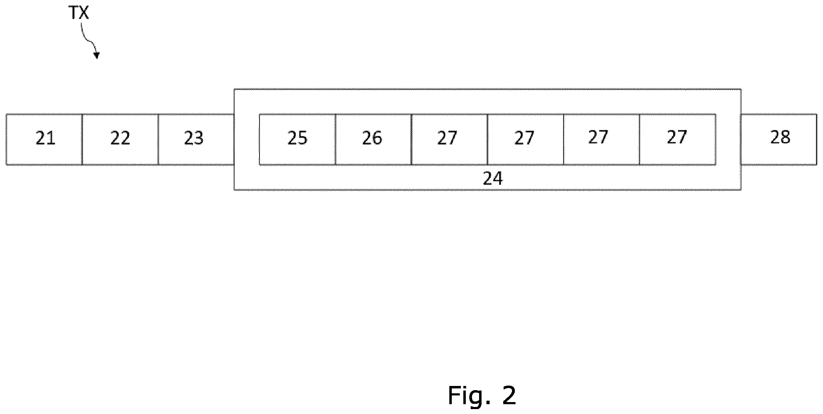

Fig. 2 illustrates an example of a data message TX. TX has transmission information comprising a radio trainup 21, data message header 22, a security header 23 including an authentication tag. Further the data message has secured content 24, which is encrypted and authenticated. The radio trainup 21 ensures synchronization between transmitter and receiver during radio transmission. The data message header 22 contains information about the identity of the transmitting utility meter such as the source address and other control information relevant for transmission of the message. The secured content 24 comprises optional time information 25, which may be absolute time of the most resent time stamp, or elapsed time from the most recent time stamp to the data transmission, optional identification 26 of the conversion model, comprising the conversion factor and/or the measurement unit, and in this case four timestamps 27, where each timestamp represents the use of the consumed utility indicated by the identification 26 of the conversion model. Further the data message may comprise a data integrity check value 28. Fig. 2 is illustrating an example of a data message. There may be alternative ways to construct especially the secured part 24 of the data message. The data message may comprise additional fields, for example the data message may contain a field for total accumulated value of the amount of consumed utility measured by the utility meter or fields for other relevant data. Especially the part of the data messages not including the secured part 24 may be arranged according to a communication protocol according to which the utility meter is arranged to transmit the data messages, such as one of the abovementioned communication protocols.

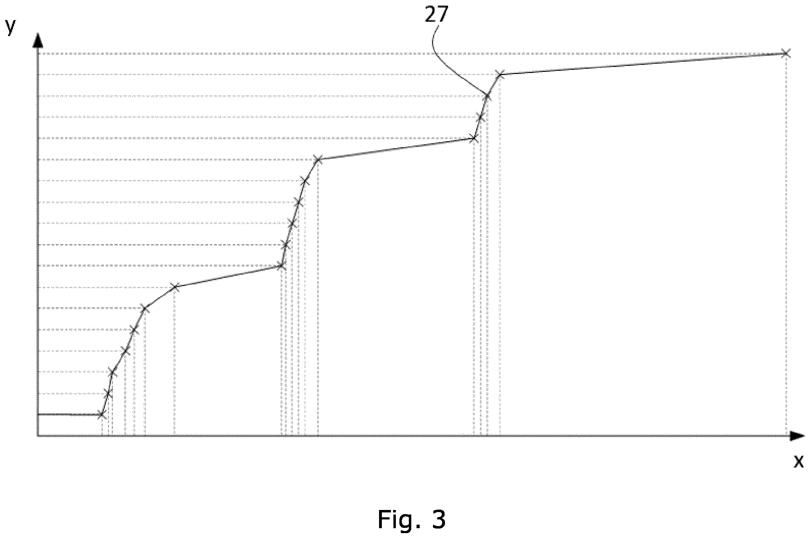

In the figures 3-10 the x-axis is time, and the y-axis is consumption.

Fig. 3 illustrates an example of a consumption profile showing consumption over time. Information about consumption is typically in prior art applications generated with fixed interval between the measurements, e.g., hourly. Such solution provides data with a fixed interval and using this approach the consumer can easily evaluate his hourly consumption. A disadvantage using this approach is, that no detailed information is provided within the hour and the consumer does not get any information whether the consumption was in the beginning or at the end of the hour.

This can be improved by changing the data generation scheme from the time-based scheme where a value is provided at the end of every time interval, e.g., hourly, daily, monthly or yearly, to a consumption-based data generation scheme where a timestamp is provided each time a predetermined amount of utility has been consumed, e.g., every 1 Liter, 10 Liter, 1 kWh, 10 GJ or similar. Hereby a consumption profile is described by the generated timestamps.

An example of such consumption graph showing a consumption profile is shown in fig. 3. The x-axis represents time, and the y-axis represents consumption. As can be seen from the graph a timestamp 27 is generated at equidistant amounts of consumed utility, e.g., every 1 Liter, 10 Liter, 1 kWh, 10 GJ or similar. The timestamps 27 is marked as cross-marks on the graphs.

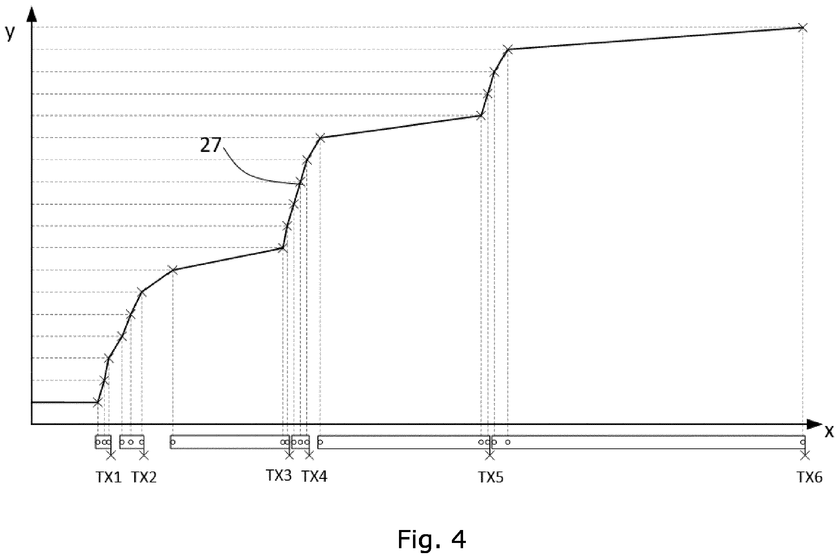

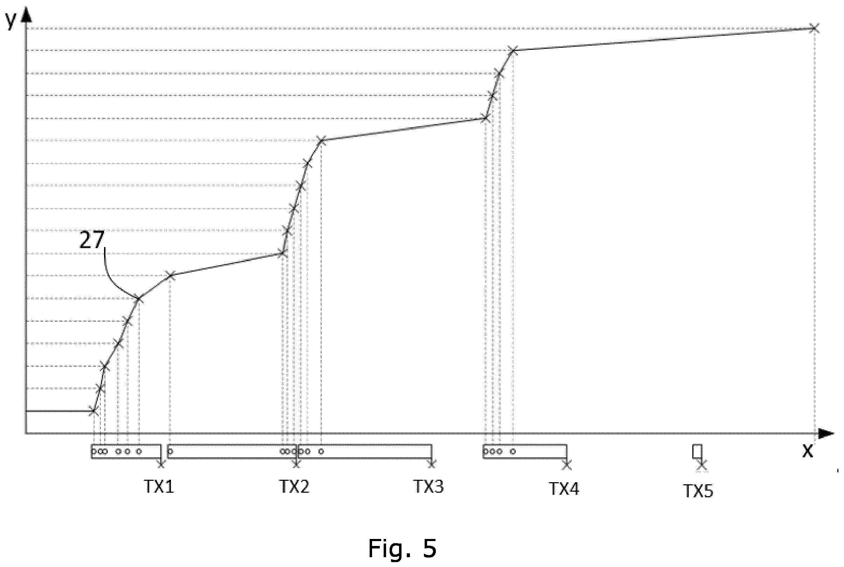

Fig. 4 and fig. 5 illustrates the problems the present invention is solving. The challenge is, how this series of timestamps 27 can be transmitted from the utility meter to the receiver in an efficient way. The most straight forward way of transmitting such series of timestamps is to transmit a data message TX, TX1-TX5 when a certain number of timestamps have been generated. This is shown in fig. 4.

In fig. 4 the cross-marks below the x-axis indicate the transmission time of a data message. In this example a data message can carry three timestamps 27 and the transmission of a data message TX1-TX5 is performed immediately after the generation of every third timestamp.

The disadvantage of this strategy is, that the transmission interval is highly dependent on the actual consumption. Consequently, the transmission points in time are dependent of the consumption profile. Even though the transmitted data message may be encrypted, and the content is thereby kept confidential, an attacker or hacker can still get knowledge about the consumption based on the transmission interval. In time periods with low consumption, there is a long interval between transmissions, and in time periods with high consumption, there is a short interval between transmissions. This can easily be used to detect abnormal behaviours of the consumer, like e.g., holiday periods where no one is at home. Such information would be against the GDPR-regulations as consumption of energy, water and gas is personal data. Even if the long-time interval between e.g., TX5 and TX6 was shortened by an additional transmission after a time-out, a changed consumption pattern would still be easily detectable. For this reason, this transmissions strategy shall be avoided, and this is the problem the present invention must solve.

Fig. 5 illustrates transmitting a series of timestamps at fixed intervals. This is solving part of the problem making the transmission points in time independent from the consumption profile by transmitting at fixed intervals. Using this approach, the transmissions take place with a fixed interval and each data message TX1-TX5 contains all timestamps 27 generated since the last transmission. Hereby the transmission points in time are independent of the consumption profile. In this case the behaviour of the consumer cannot be detected from the transmission intervals.

However, the situation illustrated in fig. 5 only solves part of the problem. The varying number of timestamps contained in the data messages will result in different message lengths. For this reason, the behaviour of the consumer can still be detected, not based on the transmission interval but based on the amount of transmitted data.

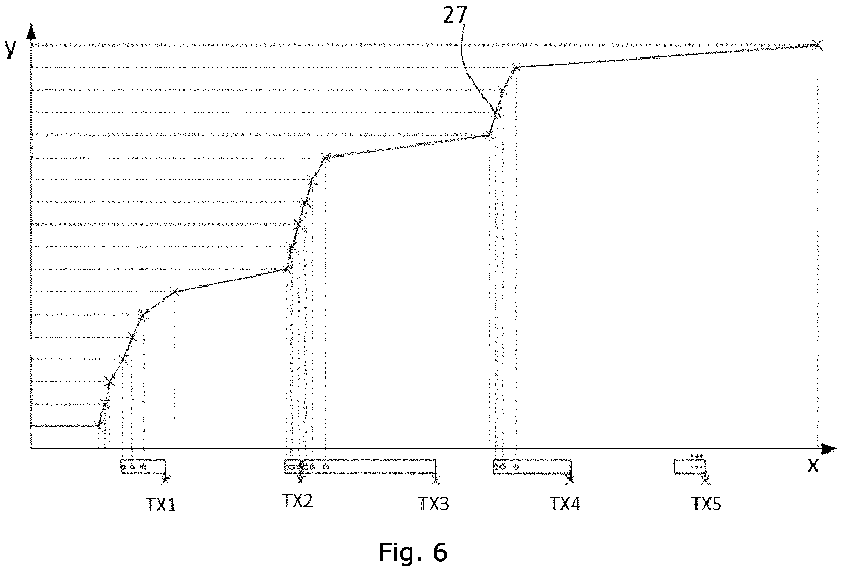

Fig. 6-10 illustrated different embodiments of the invention solving the problems illustrated in fig. 4 and 5.

Fig. 6 illustrates an embodiment transmitting a series of timestamps at fixed intervals and fixed data message size, this is an embodiment of the invention, solving the problem, so that it is not possible to detect the consumption profile by monitoring the transmission. To make the transmissions fully independent of the actual consumption profile, also the length of the data messages must be independent of the consumption profile. This may be achieved if the size of the data message is fixed in addition to the fixed transmissions interval. In an alternative the number of timestamps or in yet another alternative the space reserved for timestamps in the data message is fixed or constant.

This is shown in fig. 6 where the transmission interval is fixed and each transmissions contains a fixed number of three timestamps 27.

However, there may arise another problem in case there may be more timestamps to be transmitted than there are room for in the data message. A first consequence of this scheme is that intervals that contains more than three timestamps as e.g., between TX1 and TX2, are not fully represented in the following transmission, here at TX2. A second consequence is that time intervals that contains less than three timestamps as in e.g., between TX4 and TX5, need to include dummy filler-timestamps in the following transmission, here at TX5.

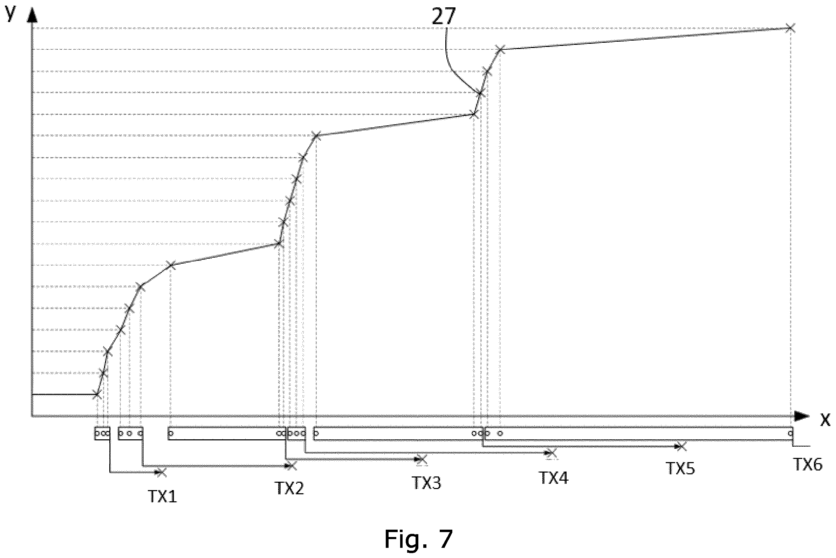

Fig. 7 illustrates an embodiment where more than the maximum number of timestamps per data message are generated within the fixed interval, and transmission of the excess timestamps are delayed, and the excess timestamps are transmitted in a subsequent data message.

In this embodiment the transmission of excess timestamps 27 is delayed in the case that more than the maximum number of timestamps per data message are generated within the fixed interval.

In this situation, each transmission contains the three oldest timestamps that have so far not been transmitted. Using this approach all timestamps 27 is transmitted but it will cause an extended delay from the generation of the timestamp till the transmission of it. Still, if less timestamps are generated than the data message has room for, dummy filler-timestamps will still be needed.

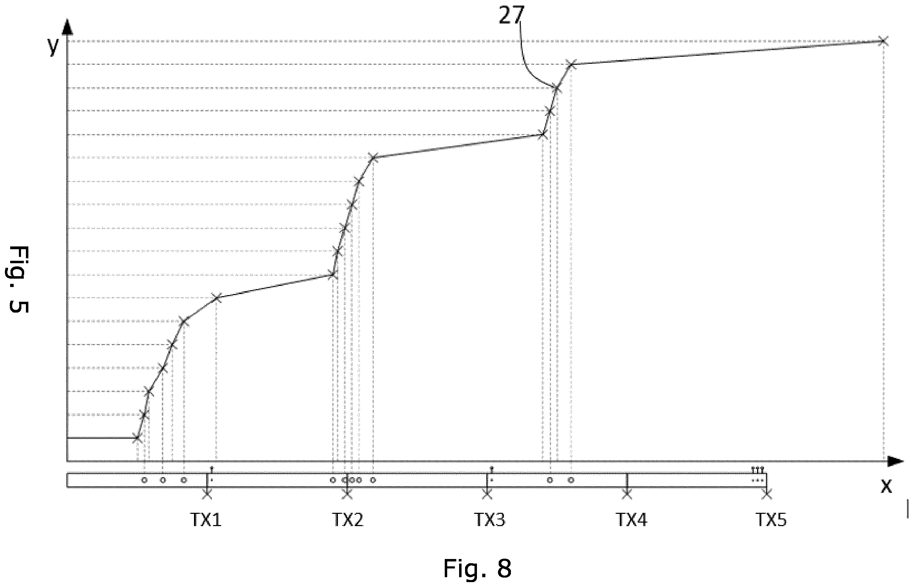

Fig. 8 illustrates an embodiment where more than the maximum number of timestamps per data message are generated within the fixed interval, and therefore a reduced number of timestamps are transmitted.

Another way of solving the issue of having more timestamps than the data message has room for is to evaluate at each transmission timepoint, how many timestamps 27 that have been generated since the last transmission. In the case that the number of generated timestamps to be sent is greater than the maximum number of timestamps of the data message, in this example in Fig. 8 the maximum number of timestamps is three, a reduced number of timestamps are transmitted. This may be done by applying a conversion factor to the consumption data. This is shown in fig. 8.

At the transmission timepoint TX1 a total number of six timestamps 27 have been generated. In this case every second timestamp are transmitted, i.e. a conversion factor of 2. In this case the receiver needs to know that for this transmission two times the typical consumption between transmitted timestamps, i.e. two times the predetermined amount of consumed utility, have been consumed. Or in other words that the conversion factor is 2.

At the transmission timepoint TX2 a total number of 4 timestamps have been generated since TX1, which also exceeds the limit of 3. The number of timestamps is again reduced to every second, which in this situation means that only two resulting timestamps are included in TX2. This results in one dummy filler-timestamp in the data message transmitted at TX2.

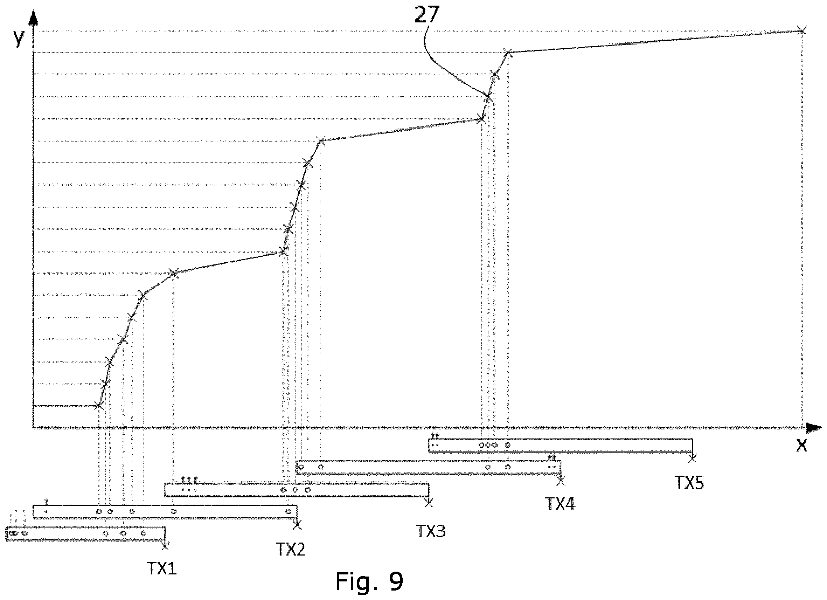

Fig. 9 illustrates an embodiment where each timestamp is transmitted twice, and dummy filler-timestamps are transmitted if there are not enough timestamps to fill up a data message.

Typically, in a RF-based communication system, redundancy is added in a way such that data are still received even though one or more data messages have not been received. This redundancy can be used together with the reduction of timestamps 27 / conversion factor as shown in fig. 9.

In this redundancy situation, each data message includes timestamps from not only the timespan since the last transmission but from the timespan since the second last transmission. E.g., the data message transmitted at TX3 includes timestamps from the time span from TX1 to TX3.

In this situation, each data message can contain six timestamps 27 and if the covered time span contains more than 6 timestamps it is reduced according to the conversion factor as shown in the previous example. And again, if the data message does not contain exactly six timestamps after the reduction, dummy filler-timestamps have been added like e.g., in the data messages transmitted at TX2, TX3, TX4, TX5.

The reduction of timestamps may be arranged such that different timestamps are omitted in the different transmissions. Looking now at the time span from TX2 till TX3 in fig. 9. This time span contains four timestamps 27, and the time span is represented in both the data message transmitted in TX3 and TX4. The reduction of timestamps is made such that different timestamps are omitted in TX3 and TX4. In this example the timespan is redundantly covered by the two data messages TX3 and TX4 and all timestamps are still being transmitted even though reduction of time stamps is done in each of the data frames. In the case that only one of the transmitted data messages in TX3 and TX4 have been received, the time span from TX2 and TX3 is still covered. But in the case that both data messages have been received, the secondly received data message still provides more information about the redundant time span as the timestamps in the two transmissions are not repeated. The two transmissions redundantly cover this time span and they complement each other.

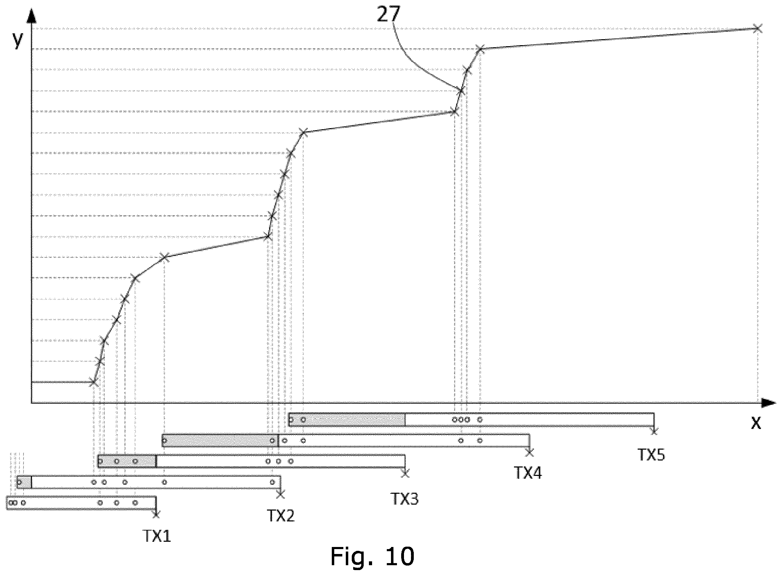

Fig. 10 illustrates an embodiment where each timestamp is transmitted at least twice and timestamps which already have been transmitted twice are used to fill up the data message if there are not enough timestamps to fill up a data message.

One drawback of the previous example is that dummy filler-timestamps are still needed. Instead of including dummy filler-timestamps, another solution is to extend the redundancy time span further than the minimum required factor of two in this example. This is shown in fig. 10.

In this example, the dummy filler-timestamps are avoided by extending the timespan covered by each data message. In e.g., the data message transmitted in TX3, the data message is required to cover as a minimum the time span from TX1 to TX3. After the reduction with a factor of two, this results in three timestamps. In the previous scheme, three dummy filler-timestamps were added. In this scheme, the data message is extended to also cover partly the timespan before TX1 to be able to fill the data message with valuable information rather than the dummy filler-timestamps. This scheme provides in this example at least a redundancy factor of two, but in some cases a higher redundancy factor may be applied.

In the examples above the maximum number of timestamps per data message are set to three. This is only an example to simplify the figures. In general, it could be any number. The maximum number could be two, three, four, five, six, seven, eight, nine, ten or even higher.

The redundancy factor is in the examples above shown as two, which is also just an example as well. This is, again, only an example to simplify the figures.

In general, the examples express the limits of the data message size as a number of timestamps. Different timestamp values can have different costs depending on the size of the value. The timestamps can even be represented as delta-time between timestamps. Short delta-times may be less expensive to transmit in a data message than long delta-times. The data message may therefore instead be limited in real message size, such as a number of bits or bytes, rather than in a specific number of timestamps. As an example, a data message may be able to contain four delta timestamps if there is a long-time distance between the timestamps and ten if there is a short time distance between the timestamps.

The data messages may beside the timestamps comprise other meter data such as absolute values of the consumed energy or an absolute value of the consumed energy at the time of one of the time stamps. Additional consumption data or consumption related data such as temperature, pressure, flow rate, battery status, leak or burst alarms, acoustic leak detection information or any other data related to the utility meter of the consumed utility may be included in the data message.

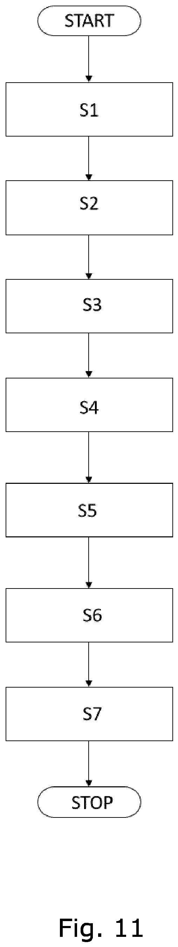

Fig. 11 is a flow chart illustrating the method of the invention. In step S1 the utility meter is measuring an amount of a consumed utility. In step S2 a conversion model is provided, wherein a timestamp corresponds to an amount of the consumed utility. In step S3 the timestamp is generated for each time the measured amount of consumed utility has increased or changed with the predetermined amount of the consumed utility. In step S4 the generated timestamps are stored in the utility meter. In step S5 data messages are generated comprising one or more stored timestamps. The data messages are generated so they are independent of the consumption profile, for instance by always including a fixed number of timestamps and always having a fixed length. In step S6 data messages are transmitted from the utility meter to a receiver at transmission points in time that are independent of the consumption profile. And then in step S7 the timestamps and the amount of consumed utility that the timestamp represents are stored in a central database.

The invention can be implemented by means of hardware, software, firmware, or any combination of these. The invention or some of the features thereof can also be implemented as software running on one or more data processors and/or digital signal processors.

The individual elements of an embodiment of the invention may be physically, functionally, and logically implemented in any suitable way such as in a single unit, in a plurality of units or as part of separate functional units. The invention may be implemented in a single unit or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for collecting consumption profile data from a utility meter, the method comprising:
- the utility meter (10) measuring an amount of a consumed utility,
- providing a conversion model, wherein a timestamp (27) corresponds to a predetermined amount of the consumed utility,
- based on the conversion model and the measured amount of consumed utility, generating in the utility meter (10) a timestamp (27) for each time the measured amount of consumed utility has increased or changed with the predetermined amount of the consumed utility, whereby a consumption profile is described by the generated timestamps,
- storing the generated timestamps (27), at least temporarily, in the utility meter (10),
- generating data messages (TX, TX1-TX6) comprising one or more of the stored generated timestamps (27), wherein each data message has a message length, which is independent of the consumption profile, preferably the data messages have a fixed length, and
- transmitting the data messages from the utility meter (10) to a receiver (12) at transmission points in time, which are independent of the consumption profile.

2. The method according to claim 1, wherein the method further comprises
- storing the consumption profile data in a central database (16), wherein the consumption profile data comprises the time registered by each timestamp (27) and the amount of the consumed utility represented by the timestamp based on the conversion model.

3. The method according to claim 2, wherein the method further comprises
- monitoring the utility meters (10) operation based on the consumption profile data stored in the central database (16).

4. The method according to claims 1-3, wherein the message length of the data messages (TX, TX1-TX6) is independent of the number of timestamps (27) in the data message.

5. The method according to claims 1-4, wherein the data messages (TX, TX1-TX6) are transmitted at predetermined times.

6. The method according to claims 1-5, wherein the data messages (TX, TX1-TX6) are transmitted within a randomized or pseudo-randomized time period from a predetermined time.

7. The method according to any of the preceding claims, wherein each data message (TX, TX1-TX6) comprises a plurality of timestamps (27) up to a maximum number of timestamps.

8. The method according to any of the claims 1-7, wherein each timestamp (27) indicates a point in time in absolute time.

9. The method according to any of claims 1-7, wherein each timestamp indicates a time difference between two adjacent points in time when the consumed utility has increased or changed with the predetermined amount.

10. The method according to any of the preceding claims, wherein the plurality of timestamps (27) in the data messages (TX, TX1-TX6) includes previously transmitted timestamps.

11. The method according to any of the claims 1-10, wherein if the number of timestamps (27) to be transmitted is larger than the maximum number of timestamps for the data message (TX, TX1-TX6), then the amount of a consumed utility that each timestamp represent is increased and the number of timestamps is correspondingly reduced.

12. The method according to any of the claims 1-10, wherein if the number of timestamps (27) to be transmitted is larger than the maximum number of timestamps for the data message (TX, TX1-TX6), then only the maximum number of timestamps are transmitted, and the remaining timestamps are saved for transmission in a subsequent data message.

13. The method according to any of the preceding claims, wherein the data message (TX, TX1-TX6) comprises a conversion factor to be multiplied with the predetermined amount to obtain the amount of the consumed utility represented by each timestamp (27) in the data message.

14. The method according to any of the preceding claims, wherein each timestamp (27) is transmitted at least twice.

15. A system for collecting consumption profile data from a utility meter, wherein the system comprises:
- the utility meter (10) arranged to measure an amount of a consumed utility, and
- a conversion model, wherein a timestamp (27) corresponds to a predetermined amount of the consumed utility,
wherein
- based on the conversion model and the measured amount of consumed utility, the utility meter (10) is arranged to generate a timestamp (27) for each time the measured amount of consumed utility has increased or changed with the predetermined amount of the consumed utility, whereby a consumption profile is described by the generated timestamps,
- the utility meter (10) is arranged to store, at least temporarily, the generated timestamps in the utility meter (10),
- the utility meter (10) is arranged to generate data messages (TX, TX1-TX6) comprising one or more of the stored generated timestamps (27), wherein each data message has a message length, which is independent of the consumption profile, preferably the data messages have a fixed length, and
- the utility meter (10) is arranged to transmit the data messages (TX) from the utility meter (10) to a receiver (12) at transmission points in time, which are independent of the consumption profile.
